# EUROPÄISCHE PATENTSCHRIFT

(11) **EP 1 543 514 B1**
(45) Veröffentlichungstag und Bekanntmachung des Hinweises auf die Patenterteilung: **24.09.2008**
(21) Anmeldenummer: 02735322.6
(22) Anmeldetag: 02.05.2002
(51) Int. Cl.: G11B 7/26, B29C 65/48

(54) **VORRICHTUNG ZUM VERKLEBEN VON SUBSTRATEN**
DEVICE FOR BONDING SUBSTRATES
DISPOSITIF CON U POUR COLLER DES SUBSTRATS

(30) Priorität: 10.05.2001 DE 10122668
(43) Veröffentlichungstag der Anmeldung: 22.06.2005
(73) Patentinhaber: Steag HamaTech AG, 75447 Sternenfels (DE)
(72) Erfinder: LEONHARDT, Stephan, 75015 Bretten (DE); WAGNER, Roland, 75447 Sternenfels (DE); GÜCLÜ, Ilhan, 75015 Bretten (DE)
(74) Vertreter: Wagner & Geyer
(86) Internationale Anmeldenummer: PCT/EP2002/004780
(87) Internationale Veröffentlichungsnummer: WO 2002/091372

(56) Entgegenhaltungen:
- WO-A-99/07542
- WO-A-99/24240
- WO-A-99/27028
- DE-A- 19 718 471
- US-B1- 6 221 454
- PATENT ABSTRACTS OF JAPAN vol. 1997, no. 05, 30. Mai 1997 (1997-05-30) & JP 09 017039 A (GLOBAL MACH KK), 17. Januar 1997 (1997-01-17)
- PATENT ABSTRACTS OF JAPAN vol. 017, no. 299 (P-1552), 8. Juni 1993 (1993-06-08) & JP 05 020714 A (MATSUSHITA ELECTRIC IND CO LTD), 29. Januar 1993 (1993-01-29)

## Beschreibung

Die vorliegende Erfindung bezieht sich auf eine Vorrichtung zum Verkleben von zwei ein Innenloch aufweisenden Substraten zu einer Substratscheibe, mit einer ersten Haltevorrichtung zum Halten des ersten Substrats, einer zweiten drehbaren Haltevorrichtung zum Halten des zweiten Substrats, und einem Antrieb zum Drehen wenigstens einer der Haltevorrichtungen.

Eine derartige Vorrichtung für das Zusammenfügen von Scheiben zu einer CD oder DVD ist beispielsweise aus der US-A-4,877,475 bekannt. Während einer Drehung der Substratscheiben, bei der ein Klebematerial gleichmäßig zwischen ihnen verteilt wird, müssen sie synchron und zentriert gedreht werden, um ein ordnungsgemäßes Zusammenfügen zu gewährleisten. Die Synchronität wird bei dem bekannten Verfahren über eine kraftschflüssige Verbindung zwischen den Substraten erreicht. Während das untere Substrat auf einer drehbaren Auflage aufliegt und mit dieser gedreht wird, wird das obere Substrat so stark gegen das untere Substrat gedrückt, daß es mit dem unteren Substrat mitgedreht wird. Das Zusammendrücken der beiden Substrate erfolgt durch eine Axialbewegung der das obere Substrat haltenden zweiten Haltevorrichtung. Die Axialbewegung der Haltevorrichtung wird über einen seitlich bezüglich einer Drehachse der zweiten Haltevorrichtung angeordneten Linearschlitten bewirkt.

Eine ähnliche Vorrichtung unter Verwendung zweier nicht gekoppelter Zentrierstifte zeigt die WO-A-99/07542, die zur Definition der Präambel von Anspruch 1 verwendet wird.

Beim Zusammendrücken der beiden Substrate kann es auftreten, daß diese nicht genau zueinander zentriert sind, wodurch ein ordnungsgemäßes Zusammenfügen beeinträchtigt wird.

Ausgehend von der bekannten Vorrichtung liegt der vorliegenden Erfindung daher die Aufgabe zugrunde, eine Vorrichtung zum Verkleben von Substraten zu schaffen, die auf einfache und kostengünstige Weise eine zentrierte Drehung beider Substrate während des Verklebevorgangs gewährleistet.

Erfindungsgemäß wird diese Aufgabe bei einer Vorrichtung der eingangs genannten Art dadurch gelöst, daß die zweite Haltevorrichtung drehfest mit einer drehbaren Welle, die einen in das Innenloch wenigstens des zweiten Substrats eingreifenden Zentrierteil aufweist, gekoppelt ist, und entlang der Drehachse der Welle auf ihr verschiebbar ist. Durch diese Merkmale wird eine Zentrierung wenigstens des zweiten Substrats zur zweiten Haltevorrichtung und somit auch zur Welle erreicht. Durch die Bewegung der Haltevorrichtung auf der Welle wird auch sichergestellt, daß das Substrat bei einer Axialbewegung der zweiten Haltevorrichtung in der zentrierten Position verbleibt.

Gemäß einer besonders bevorzugten Ausführungsform der Erfindung fällt die Drehachse der ersten Haltevorrichtung mit der Drehachse der Welle zusammen. Dies gewährleistet beim Zusammenfügen eine gleichmäßige und zentrierte Drehung der beiden Substrate um eine gemeinsame Drehachse. Dabei ist die Welle vorzugsweise frei drehbar in einem Träger aufgenommen, um ohne einen eigenen Antrieb frei gedreht werden zu können. Zum Be- und Entladen der Substrate bzw. der Substratscheibe ist die Welle vorzugsweise entlang ihrer Drehachse mit dem Träger bewegbar. Dabei ist die zweite Haltevorrichtung vorzugsweise gemeinsam mit der Welle entlang ihrer Drehachse bewegbar.

Bei einer Ausführungsform der Erfindung ist ein drehfest mit der ersten Haltevorrichtung verbundener Zentrierstift vorgesehen, der in das Innenloch wenigstens des ersten Substrats einführbar ist, um es zu zentrieren. Vorteilhafteweise ist der Zentrierteil an der Welle als Mitnehmer ausgebildet, der mit dem Zentrierstift in Eingriff bringbar ist. Hierdurch kann die Drehbewegung einer der beiden Haltevorrichtungen leicht auf die andere Haltevorrichtung und das daran gehaltene Substrat übertragen werden. Durch diese Übertragung der Drehbewegung zwischen dem Zentrierstift und dem Mitnehmer ergibt sich zu jedem Zeitpunkt eine synchrone Drehung der beiden Substrate während des Verklebens. Außerdem kann der Abstand zwischen den Substraten und der Zeitpunkt des Zusammenfügens frei gewählt werden, da die Drehbewegung nicht über einen Kontakt der Substrate übertragen wird.

Gemäß einer besonders bevorzugten Ausführungsform der Erfindung weisen der Zentrierstift und der Mitnehmer komplementäre Strukturen für einen formschlüssigen Eingriff auf, so daß die Übertragung der Drehbewegung ohne Anlegen einer großen Axialkraft zwischen dem Zentrierstift und dem Mitnehmer gewährleistet ist. Für eine einfache Ausführung der komplementären Strukturen umfassen sie vorzugsweise Zähne am Zentrierstift und am Mitnehmer. Um ein leichtes Zusammenfügen der Zähne in Axialrichtung und eine selbstzentrierende Funktion vorzusehen, weisen die Zähne jeweils eine im wesentlichen parallel zur Axialrichtung des Zentrierstifts verlaufende, so wie eine hierzu geneigte Zahnflanke auf. Dabei weist die parallel zur Axialrichtung verlaufende Zahnflanke am Zentrierstift vorzugsweise in Drehrichtung, um eine gute Kraftübertragung vom Zentrierstift auf den Mitnehmer vorzusehen. Vorzugsweise bewirken die Zähne beim In-Eingriff-Kommen eine Drehausrichtung zwischen dem Zentrierstift und dem Mitnehmer.

Für einen einfachen Aufbau der erfindungsgemäßen Vorrichtung ist der Zentrierstift vorzugsweise ortsfest angeordnet, so daß nur der Mitnehmer auf den Zentrierstift zu und von diesem weg bewegt werden muß. Vorzugsweise ist der Mitnehmer axial auf den Zentrierstift zu und von diesem weg bewegbar, was eine besonders einfache Führung für den Mitnehmer und ein besonders einfaches Zusammenfügen des Mitnehmers mit dem Zentrierstift ermöglicht. Vorzugsweise weisen der Zentrierstift und der Mitnehmer den selben Umfang auf, wodurch eine durchgängige Zentrierfläche für die beiden Substrate gebildet wird. Dabei ist der Mitnehmer vorzugsweise als Zentrierstift für das Innenloch des zweiten Substrates vorgesehen.

Um die Substrate während der Drehung sicher zu halten, weist wenigstens eine der Haltevorrichtungen wenigstens einen Vakuumsauger auf. Für einen guten und gleichmäßigen Halt der Substrate weist der Vakuumsauger vorzugsweise einen Ring mit einer Vielzahl von Saugöffnungen auf.

Die Erfindung wird nachfolgend anhand bevorzugter Ausführungsbeispiel unter Bezugnahme auf die Zeichnungen erläutert; in den Zeichnungen zeigt;
- Figur 1: eine perspektivische Ansicht eines Zentrierstifts gemäß der vorliegenden Erfindung;
- Figur 2: eine Seitenansicht auf einen Zentrierstift und einen Mitnehmer gemäß der vorliegenden Erfindung; und
- Figur 3: eine schematische Teilschnittansicht durch eine Vorrichtung zum Verkleben von Substraten gemäß der vorliegenden Erfindung.
- Figur 4: eine schematische Schnittansicht durch einen oberen Teil der Vorrichtung gemäß Fig. 3.

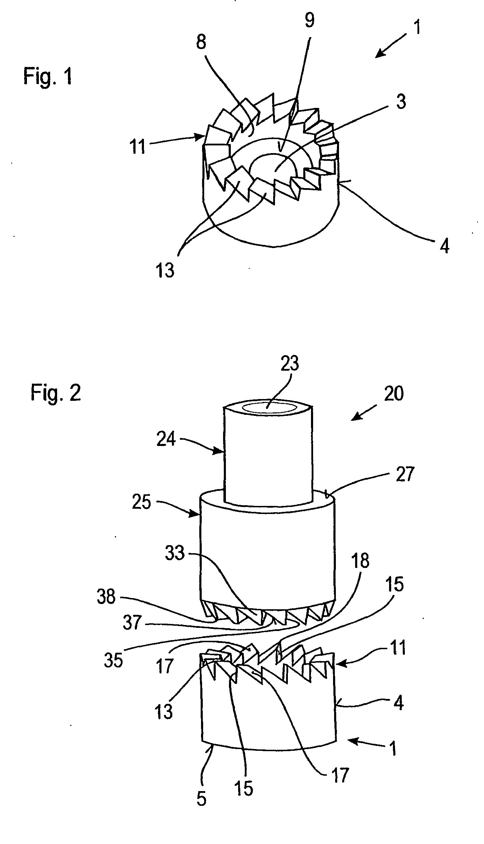

Figur 1 zeigt eine perspektivische Ansicht eines Zentrierstifts 1 gemäß eines bevorzugten Ausführungsbeispiels der vorliegenden Erfindung. Der Zentrierstift ist in größerer Einzelheit in der auf dieselbe Anmelderin zurückgehenden und am selben Tag wie die vorliegende Anmeldung eingereichte Anmeldung "Vorrichtung zum Verkleben von Substraten" beschrieben, die zum Gegenstand der vorliegenden Anmeldung gemacht wird, um Wiederholungen zu vermeiden. Der Zentrierstift 1 weist eine kreiszylindrische Form mit einer Mittelöffnung 3 und einer Umfangsfläche 4 auf, die zur Führung und Zentrierung von ein Innenloch aufweisenden Substraten dient.

Der Zentrierstift 1 weist eine ebene Unterseite 5 auf. In einem nach oben weisenden Abschnitt des Zentrierstifts 1 ist eine kreisrunde Ausnehmung 8 mit einem Durchmesser, der größer ist als der Durchmesser der Mittelöffnung 3 vorgesehen. Durch diese Ausnehmung 8 wird eine nach oben weisende Schulter 9 gebildet, die sich zwischen der Mittelöffnung 3 und einem Wandteil 11 des Zentrierstifts 1 erstreckt. Der Wandteil 11 besitzt an seiner Stirnseite, d. h. in Axialrichtung des zylindrischen Zentrierstifts 1 nach oben weisend, eine Zahnkontur mit einer Vielzahl von Zähnen 13 auf. Wie am besten in Fig. 2 zu erkennen ist, weisen die Zähne 13 jeweils eine sich im wesentlichen parallel zur Axialrichtung des Zentrierstifts verlaufende Zahnflanke 15 sowie eine hierzu geneigte Zahnflanke 17 auf, die sich jeweils an einem Scheitelpunkt 18 treffen.

In Figur 2 ist neben dem Zentrierstift 1 auch ein darüber angeordneter Mitnehmer 20 gezeigt. Der Mitnehmer 20 besitzt eine kreiszylindrische Form mit einer Mittelöffnung 23. Der Mitnehmer 20 weist einen oberen Abschnitt 24 sowie einen unteren Abschnitt 25 auf. Der obere Abschnitt 24 besitzt eine kleinere Umfangsabmessung wie der untere Abschnitt 25, so daß dazwischen eine Schulter 27 gebildet wird. Die Umfangsabmessung des unteren Abschnitts 25 entsprechen der Umfangsabmessung des Zentrierstifts 1. Am nach unten weisenden Ende des unteren Abschnitts 25 ist eine in Axialrichtung des Mitnehmers 20 weisende Zahnreihe mit einer Vielzahl von Zähnen 33 vorgesehen. Die Zähne 33 sind komplementär zu den Zähnen 13 am Zentrierstift 1 und sie weisen ebenfalls jeweils eine parallel zur Axialrichtung des Mitnehmers verlaufende Zahnflanke 35 sowie eine hierzu geneigte Zahnflanke 37 auf, die sich an einem Scheitelpunkt 38 der Zähne 33 treffen.

Wenn der Zentrierstift 1 und der Mitnehmer 20 axial aufeinander zubewegt werden, gleiten die geneigten Zahnflanken 17 und 37 der komplementären Zähne 13 bzw. 33 aneinander entlang, um eine Drehausrichtung zwischen dem Zentrierstift 1 und dem Mitnehmer 20 zu erreichen. Ferner wird durch die Form der Zähne 13 bzw. 33 eine Zentrierung des Zentrierstifts 1 zu dem Mitnehmer 20 erreicht. Im axial zusammenbewegten Zustand bilden der Zentrierstift 1 und der Mitnehmer 20 eine im wesentlichen gleichmäßige Umfangsfläche.

Wie zuvor erwähnt, kann der Zentrierstift 1 mit einer Drehwelle einer Dreheinrichtung verbunden werden, wodurch er aktiv um seine Längsmittelachse gedreht werden kann. Die parallel zur Axialrichtung des Zentrierstifts verlaufenden Zahnflanken weisen dabei in Drehrichtung, so daß sie bei einer Drehung des Zentrierstifts 1 mit den parallel zur Axialrichtung des Mitnehmers 20 verlaufenden Zahnflanken 35 formschlüssig in Eingriff kommen und somit eine gut Kraftübertragung zwischen dem Zentrierstift 1 und dem Mitnehmer 20 ermöglichen. Natürlich kann alternativ auch der Mitnehmer 20 mit einer angetriebenen Drehwelle verbunden sein, wobei dann die parallel zur Axialrichtung des Zentrierstifts verlaufenden Zahnflanken in Drehrichtung weisen.

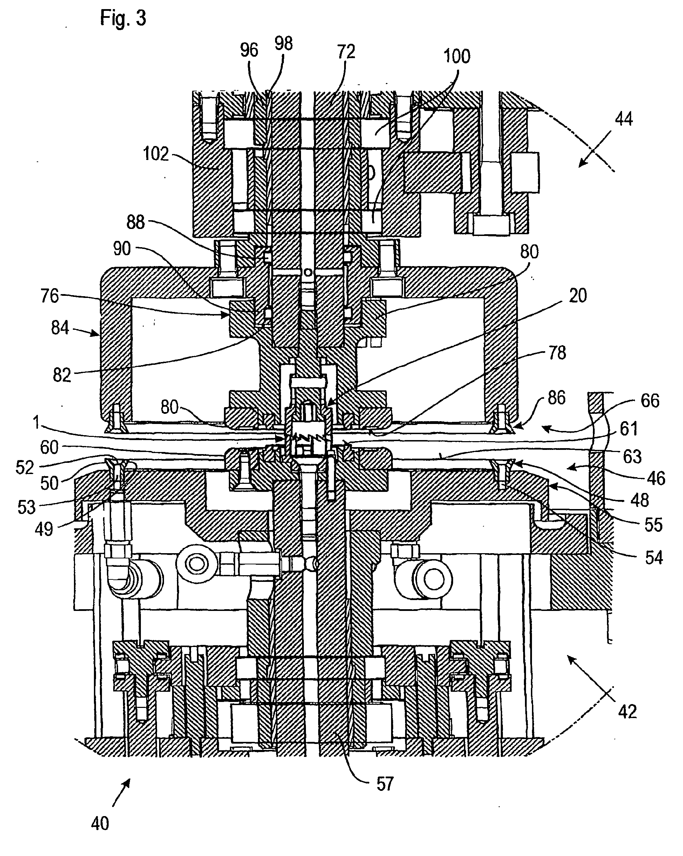

Figur 3 zeigt nunmehr eine schematische Schnittansicht einer Vorrichtung 40 zum Verkleben von zwei ein Innenloch aufweisenden Substraten, die zur Vereinfachung der Darstellung in Fig. 3 weggelassen wurden. Die Vorrichtung 40 weist ein Unterteil 42 sowie ein Oberteil 44 auf, die in Fig. 3 jeweils nur teilweise dargestellt sind. Das Unterteil 42 besitzt eine Zentrier- und Halteeinrichtung 46, die den Zentrierstift 1 aufweist. Die Zentrier- und Halteeinrichtung 46 weist ferner einen Vakuumgreifer in der Form eines Vakuumrings 48 auf. Der Vakuumring 48 besitzt eine kreisförmige, innenliegende Dichtlippe 49 sowie eine kreisförmige, außenliegende Dichtlippe 50, die dazwischen einen ringförmigen Raum 52 bilden. Der Raum 52 steht über einer Vielzahl von Vakuumöffnungen 53 mit einem Ringraum 54 in einem Träger 55 in Verbindung. Der Ringraum 54 steht über eine geeignete Zuleitung mit einer Unterdruckquelle, wie z.B. einer Pumpe, in Verbindung. Der Träger 55, der den Vakuumring 48 trägt, ist fest mit einer Drehwelle 57 des Unterteils 42 verbunden und mit dieser drehbar. Die Drehwelle 57 ist über eine geeignete Drehvorrichtung, wie beispielsweise einen Elektromotor, um ihre Längsachse drehbar. Der Saugring 48 ist konzentrisch zur Drehachse der Welle 57. Obwohl der Träger 55 drehfest mit der Welle 57 verbunden ist, ist die Welle 57 in Axialrichtung zum Träger 55 verschiebbar oder der Träger 55 zur Welle 57.

An ihrem oberen Ende trägt die Drehwelle 57 einen drehfest mit der Welle und axial mit der Welle verschiebbaren Aufsatz 60, an dem auch der Zentrierstift 1 befestigt ist. Der Zentrierstift 1 und der Aufsatz 60 sind somit mit der Drehwelle 57 drehbar und mit ihr in Axialrichtung verschiebbar. Der Aufsatz 60 weist eine gestufte Oberseite 61 auf, die über eine durch den Saugring 48 gebildete Ebene 63 hinaus nach oben bewegbar ist.

Die Funktion dieser Bewegung wird nachfolgend bei einer Funktionsbeschreibung der Vorrichtung 40 noch näher erläutert.

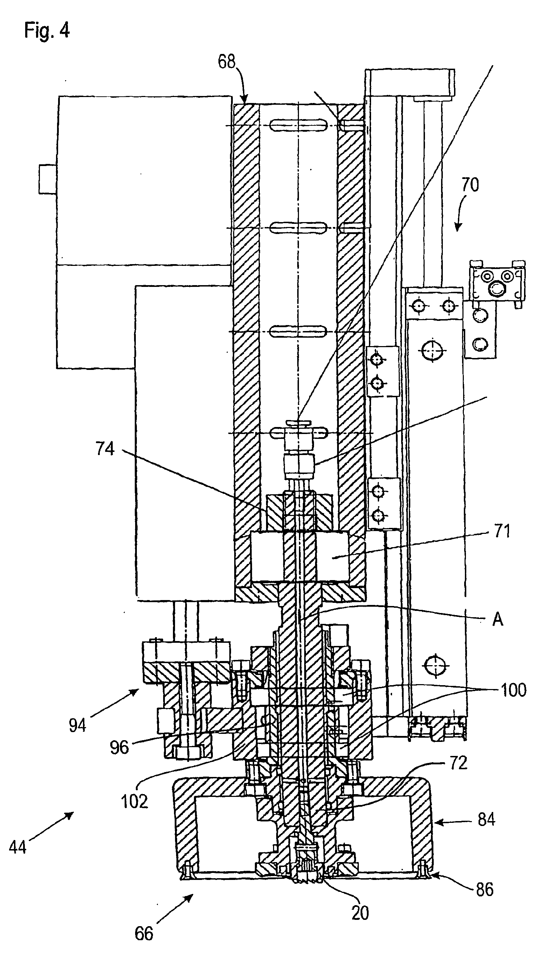

Das Oberteil 44, das auch in Fig. 4 dargestellt ist, weist eine Halte- und Zentriereinrichtung 66 auf, die den Mitnehmer 20 beinhaltet. Die Zentrier- und Halteeinrichtung 66 ist oberhalb der Zentrier- und Halteeinrichtung 46 angeordnet und ausschließlich in Axialrichtung zu dieser bewegbar, so daß die beiden Vorrichtungen zum Be- und Entladen von Substraten nur aufeinander zu und voneinander weg bewegt werden müssen.

Das Oberteil 44 weist, wie am Besten in Fig. 4 zu erkennen ist, einen Träger 68 auf, der über einen geeigneten Schlittenmechanismus 70 in Axialrichtung verfahrbar ist. Ein Lager 71 in dem Träger 68 nimmt frei drehbar eine Welle 72 auf. Die Welle 72 ist über ein entsprechendes Befestigungselement, wie beispielsweise eine Mutter 74 in dem Träger 68 derart fixiert, dass sich die Welle 72 zwar frei um ihre Drehachse A drehen kann, aber in Axialrichtung bezüglich des Trägers 68 fixiert ist. Die Welle 72 ist somit über den Schlittenmechanismus 70 in Axialrichtung bewegbar. Die Bewegungsrichtung des Schlittenmechanismus 70 ist genau parallel zur Drehachse der Welle 72 so daß die Welle 72 bei einer Bewegung des Trägers 68 entlang ihrer Drehachse A bewegt wird.

An dem freien, unteren Ende der Welle 72 ist der Mitnehmer 20 derart angebracht, daß er drehfest mit der Welle 72 verbunden ist und in Axialrichtung mit ihr bewegbar ist. Der Mitnehmer ist ferner derart angebracht, daß dessen Mittelachse mit der Drehachse der Welle 72 zusammenfällt.

An dem freien, unteren Ende der Welle 72 ist ferner drehfest ein Aufsatz 76 angebracht, der eine nach unten weisende ringförmige Anlagefläche 78 mit abgerundeten Außenkanten 80 aufweist. Die Anlagefläche 78 umgibt ringförmig den Mitnehmer 20 und ist gegenüber dessen unterstem Ende nach oben zurückgesetzt.

Der Aufsatz 76 weist an seinem von der Anlagefläche 78 entgegengesetzten Ende einen Flansch 80 auf, der die Welle 72 ringförmig umgibt und zur Bildung eines Ringraums 82 von der Welle 72 beabstandet ist, wie am Besten in Fig. 3 zu erkennen ist.

Die Zentrier- und Halteinrichtung 66 am Oberteil 44 weist einen glockenförmigen Träger 84 auf, an dessen nach unten weisender Stirnseite ein Vakuumring 86 angeordnet ist, der im Wesentlichen denselben Aufbau besitzt wie der Vakuumring 48. Der Vakuumring steht über geeignete, nicht näher dargestellte Mittel, mit einer Unterdruckquelle, wie beispielsweise einer Pumpe, in Verbindung.

Der Träger 84 umgibt wenigstens teilweise die Welle 72 und ist in geeigneter Weise, wie beispielsweise mittels einer Keilnutverbindung drehfest mit der Welle 72 verbunden. Über geeignete Lager 88 ist der Träger 84 aber axial entlang der Welle 72 bewegbar, wie nachfolgend noch näher erläutert wird. Ein Flanschteil 90 des Trägers 84 erstreckt sich in den zwischen dem Flansch 80 des Aufsatzes 76 und der Welle 72 gebildeten Ringraum 82. Hierdurch wird sichergestellt, daß durch Reibung zwischen der Welle 72 und den Lagern 88 entstehende Partikel in dem Ringraum 82 aufgefangen werden und nicht auf die zusammenzufügenden Substrate gelangt.

Der Träger 84 ist mit einem Linearbewegungsmechanismus 94 gekoppelt, der, wie nachfolgend noch näher beschrieben wird, eine Bewegung des Trägers 84 entlang der Welle 72 bewirkt. Der Linearbewegungsmechanismus 94 ist seinerseits an dem Träger 68 befestigt, so daß er auch einer Linearbewegung des Trägers 68 folgt. Der Schlittenmechanismus 70 weist einen viel größeren Hubbereich auf als der Linearbewegungsmechanismus 94, so daß eine grobe Positionierung der Bauteile des Oberteils 44 in Axialrichtung über den Schlittenmechanismus 70 erfolgt, und eine feine Bewegung ausschließlich des Trägers 84 über den Linearbewegungsmechanismus 94 erfolgt.

Die Koppelung zwischen dem Träger 84 und dem Linearbewegungsmechanismus 94 erfolgt über eine zylindrische Hülse 96, die in geeigneter Weise mit dem Träger 84 verbunden ist, die über ein zylindrisches Gleitlager 98 auf der Welle 72 verschiebbar ist. Die Hülse 96 ist von zwei Lagern 100 umgeben, um eine Drehbewegung der zylindrischen Hülse 96 mit dem Träger 84 bezüglich einer zylindrischen Aufnahmehülse 102 zu erlauben, die drehfest mit der Linearbewegungseinheit 94 verbunden ist. Eine durch den Linearbewegungsmechanismus 94 bewirkte Axialbewegung der Aufnahmehülse 102 wird über entsprechende, sich radial erstreckende Begrenzungen an der Aufnahmehülse 102 und/oder der Hülse 96 auf die Hülse 96 übertragen. Die Hülse 96 überträgt die Axialbewegung wiederum auf den Träger 84. Diese Axialbewegung ist durch die Welle 72 geführt, so daß der Träger 84, und insbesondere der Vakuumring 86, in genauer Ausrichtung zur Welle 72 bzw. zu dessen Drehachse A in Axialrichtung bewegt wird. Somit ist der Träger 84, und insbesondere der Vakuumring 86, auch zum Mitnehmer 20 und dem Aufsatz 76 in Axialrichtung verschiebbar. Die Funktion dieser axialen Verschiebung wird nachfolgend noch näher beschrieben.

Der Betriebsablauf der Vorrichtung 40 wird nun unter Bezugnahme auf die Fig. 3 und 4 näher erläutert.

Zunächst werden das Unterteil 42 und das Oberteil 44 über den Schlittenmechanismus 70 in Axialrichtung auseinanderbewegt, so daß die Zentrier- und Halteeinrichtungen 46 und 66 jeweils ein ein Innenloch aufweisendes Substrat, wie beispielsweise ein DVD Halbseite aufnehmen können. Dabei erstreckt sich der Zentrierstift 1 in das Innenloch eines ersten Substrats, während sich der Mitnehmer 20 in das Innenloch des anderen Substrats erstreckt. Die Substrate werden durch die jeweiligen Vakuumringe 48 bzw. 86 an den Zentrier- und Halteeinrichtungen 46 bzw. 66 gehalten. Die Aufsätze 60 bzw. 76 befinden sich in einer zurückgezogenen Position, in der sie mit den an den Vakuumringen 48 bzw. 86 gehaltenen Substraten nicht in Kontakt stehen. In dieser Position kann über eine nicht näher dargestellte Aufbringvorrichtung ein Kleber auf eines der Substrate aufgebracht werden. Der Kleber wird vorzugsweise im Bereich des Mittellochs des Substrats in der Form einer kreisförmigen Wulst auf das Substrat aufgebracht. Alternativ kann der Kleber (schon vor dem Beladen der Vorrichtung) auf eines oder beide der Substrate aufgebracht worden sein.

Anschließend werden das Unterteil 42 und das Oberteil 44 derart aufeinander zu bewegt, daß die Zähne 13 am Zentrierstift 1 und die Zähne 33 am Mitnehmer 20 ineinandergreifen. Durch die Form der Zähne 13 erfolgt hierbei eine Drehausrichtung zwischen dem Zentrierstift 1 und dem Mitnehmer 20, sowie eine Zentrierung der beiden Elemente zueinander. Zu diesem Zeitpunkt werden die durch die Vakuumringe 48 bzw. 86 gehaltenen Substrate parallel und mit geringem Abstand zueinander gehalten. Nun wird die Drehwelle 57 über die Antriebsvorrichtung und ihre Längsachse gedreht. Dabei werden der Träger 55 mit dem Vakuumring 48, sowie der Zentrierstift 1 und der Aufsatz 60 mit der Welle mitgedreht. Durch den formschflüssigen Eingriff zwischen dem Zentrierstift 1 und dem Mitnehmer 20 wird auch der Mitnehmer 20 und somit die Drehwelle 72, der Aufsatz 76 und der Träger 84 mitgedreht. Auf diese Weise werden die zu diesem Zeitpunkt beabstandet voneinander gehaltenen Substrate synchron zueinander gedreht.

Durch eine Relativbewegung zwischen dem Träger 55 und der Drehwelle 57 in Axialrichtung der selben wird die gestufte Oberseite 61 des Aufsatzes 60 in Kontakt mit dem am Vakuumring 48 gehaltenen Substrat gebracht. Durch eine weiterführende Bewegung des Aufsatzes 60 derart, daß dessen Oberseite 61 über die durch den Vakuumring 48 gebildete Ebene 63 hinausbewegt wird, wird das weiterhin am Vakuumring 48 gehaltene Substrat im Mittelbereich nach oben durchgebogen. Dadurch kommt das Substrat mit dem darüber liegenden Substrat zunächst im Mittelbereich in Kontakt. Durch eine entsprechende Relativbewegung zwischen dem Vakuumring 48 und dem Aufsatz 60 wird nun das am Vakuumring 48 gehaltene Substrat fortschreitend von innen nach außen mit den darüber gehaltenen Substrat zusammengebracht und mit diesem verklebt.

Alternativ oder auch zusätzlich erfolgt eine entsprechende Verbiegung des am Vakuumring 86 gehaltenen Substrats durch eine Bewegung des Trägers 84 entlang der Welle 72. Durch eine Bewegung des Trägers 84 nach oben entlang der Welle 72 wird das an dem Vakuumring 86 gehaltene Substrat zunächst gegen die Anlagefläche 78 des Aufsatzes 76 bewegt und dann um die abgerundeten Kanten 80 leicht umgebogen. Hierdurch kann ein Kontakt der beiden Substrate im Mittelbereich derselben bewirkt werden. Durch eine umgekehrte Bewegung des Trägers 84 entlang der Welle 72 können die Substrate nunmehr fortschreitend von Innen nach Außen zusammengebracht und verklebt werden.

Eine Verbiegung des unteren Substrats kann parallel zur Verbiegung des oberen Substrats erfolgen, sie kann aber auch komplett weggelassen werden.

Hierdurch wird ein Verkleben der beiden Substrate ohne Lufteinschlüsse dazwischen sichergestellt.

Während des obigen Vorgangs werden die beiden Zentrier- und Halteeinrichtungen 46, 66 und somit die daran gehaltenen Substrate synchron und zentriert zueinander gedreht, was ein gutes und homogenes Zusammenfügen ermöglicht.

Obwohl die Erfindung anhand eines bevorzugten Ausführungsbeispiels der Erfindung beschrieben wurde, ist die Erfindung nicht auf das konkret dargestellte Ausführungsbeispiel beschränkt. Beispielsweise können die beiden Substrathalte- und Zentriereinrichtungen statt horizontal auch vertikal ausgerichtet sein, so daß ein Zusammenfügen der Substrate in vertikaler Ausrichtung erfolgt. Statt einen Drehantrieb für die Welle 57 vorzusehen, könnte auch ein Drehantrieb für die Welle 72 vorgesehen werden, wobei in diesem Fall die Welle 57 frei drehbar gelagert wäre.

## Patentansprüche

1. Vorrichtung (40) zum Verkleben von zwei ein Innenloch aufweisenden Substraten zu einer Substratscheibe, mit einer ersten, drehbaren Haltevorrichtung (48) zum Halten des ersten Substrats, einer zweiten drehbaren Haltevorrichtung (86) zum Halten des zweiten Substrats, und einem Antrieb (57) zum Drehen der ersten Haltevorrichtungen (48), **dadurch gekennzeichnet, daß** die zweite Haltevorrichtung (86) drehfest mit einer drehbaren Welle (72) gekoppelt ist, die einen in das Innenloch wenigstens des zweiten Substrats eingreifenden Zentrierteil (20) aufweist, und daß die zweite Haltevorrichtung (86) entlang der Drehachse (A) der Welle (72) auf ihr axial verschiebbar ist.

2. Vorrichtung nach Anspruch 1, **dadurch gekennzeichnet, daß** die Drehachse der ersten Haltevorrichtung (48) mit der Drehachse (A) der Welle (72) zusammenfällt.

3. Vorrichtung nach Anspruch 1 oder 2, **dadurch gekennzeichnet, daß** die Welle (72) frei drehbar in einem Träger (68) aufgenommen ist.

4. Vorrichtung nach Anspruch 2, **dadurch gekennzeichnet, daß** die Welle (72) entlang ihrer Drehachse mit dem Träger (68) bewegbar ist.

5. Vorrichtung nach Anspruch 4, **dadurch gekennzeichnet, daß** die zweite Haltevorrichtung (86) auf der Welle (72) entlang ihrer Drehachse bewegbar ist.

6. Vorrichtung nach einem der vorhergehenden Ansprüche, **gekennzeichnet durch** einen drehfest mit der ersten Haltevorrichtung (48) verbundenen Zentrierstift (1), der in das Innenloch wenigstens des ersten Substrats einführbar ist.

7. Vorrichtung nach Anspruch 6, **dadurch gekennzeichnet daß** der Zentrierteil an der Welle (72) als Mitnehmer (20) ausgebildet ist, der mit dem Zentrierstift (1) in Eingriff bringbaren ist.

8. Vorrichtung (40) nach Anspruch 7, **dadurch gekennzeichnet, daß** der Zentrierstift (1) und der Mitnehmer (20) komplementäre Strukturen für einen formschlüssigen Eingriff aufweisen.

9. Vorrichtung (40) nach Anspruch 8, **dadurch gekennzeichnet, daß** die Strukturen Zähne (13; 33) am Zentrierstift (1) und am Mitnehmer (20) umfassen.

10. Vorrichtung (40) nach Anspruch 9, **dadurch gekennzeichnet, daß** die Zähne (13; 33) jeweils eine im wesentlichen parallel zur Axialrichtung des Zentrierstifts (1) bzw. es Mitnehmers (20) verlaufende Zahnflanke (15; 35) und eine hierzu geneigte Zahnflanke (17; 37) aufweisen.

11. Vorrichtung (40) nach Anspruch 10, **dadurch gekennzeichnet, daß** die parallel zur Axialrichtung verlaufende Zahnflanke (15) am Zentrierstift (1) in Drehrichtung weist.

12. Vorrichtung (40) nach einem der Ansprüche 9 bis 11, **dadurch gekennzeichnet, daß** die Zähne (13, 33) beim In-Eingriff-Kommen eine Drehausrichtung zwischen Zentrierstift (1) und Mitnehmer (20) bewirken.

13. Vorrichtung (40) nach einem der Ansprüche 6 bis 12, **dadurch gekennzeichnet, daß** der Zentrierstift (1) in der Vorrichtung (40) ortsfest ist.

14. Vorrichtung (40) nach einem der Ansprüche 7 bis 13, **dadurch gekennzeichnet, daß** der Mitnehmer (20) als Zentrierstift für das Innenloch des zweiten Substrats vorgesehen ist.

15. Vorrichtung (40) nach einem der Ansprüche 7 bis 14, **dadurch gekennzeichnet, daß** der Zentrierstift (1) und der Mitnehmer (20) denselben Umfang aufweisen.

16. Vorrichtung (40) nach einem der vorhergehenden Ansprüche, **dadurch gekennzeichnet, daß** wenigstens eine der Haltevorrichtungen (48; 86) wenigstens einen Vakuumsauger aufweist.

17. Vorrichtung nach Anspruch 16, **dadurch gekennzeichnet, daß** der Vakuumsauger einen Ring mit einer Vielzahl von Saugöffnungen (53) aufweist.

## Claims

1. Device (40) for gluing two substrates, which have an inner hole, to form a substrate wafer, with a first rotatable holding device (48) for holding the first substrate, a second rotatable holding device (86) for holding the second substrate and a drive (57) for rotating the first holding device (48), **characterised in that** the second holding device (86) is coupled with a rotatable shaft (72) to be secure against rotation relative thereto, which shaft has a centring part (20) engaging in the inner hole of at least the second substrate, and that the second holding device (86) is axially displaceable on the shaft (72) along the axis (A) of rotation thereof.

2. Device according to claim 1, **characterised in that** the axis of rotation of the first holding device (48) coincides with the axis (A) of rotation of the shaft (72).

3. Device according to claim 1 or 2, **characterised in that** the shaft (72) is received in a carrier (68) to be freely rotatable.

4. Device according to claim 2, **characterised in that** the shaft (72) is movable along the axis of rotation thereof together with the carrier (68).

5. Device according to claim 4, **characterised in that** the second holding device (86) is movable on the shaft (72) along the axis of rotation thereof.

6. Device according to any one of the preceding claims, **characterised by** a centring pin (1), which is connected with the first holding device (48) to be secure against rotation relative thereto and is introducible into the inner hole of at least the first substrate.

7. Device according to claim 6, **characterised in that** the centring part at the shaft (72) is formed as an entrainer (20) which can be brought into engagement with the centring pin (1).

8. Device (40) according to claim 7, **characterised in that** the centring pin (1) and the entrainer (20) have complementary structures for a mechanically positive engagement.

9. Device (40) according to claim 8, **characterised in that** the structures comprise teeth (13; 33) at the centring pin (1) and the entrainer (20).

10. Device (40) according to claim 9, **characterised in that** the teeth (13; 33) each have a tooth flank (15; 35), which extends substantially parallel to the axial direction of the centring pin (1) or the entrainer (20), and a tooth flank (17; 37) inclined relative thereto.

11. Device (40) according to claim 10, **characterised in that** the tooth flank (15), which extends parallel to the axial direction, at the centring pin (1) faces in rotational direction.

12. Device (40) according to any one of claims 9 to 11, **characterised in that** the teeth (13, 33) when coming into engagement produce a rotational alignment between centring pin (1) and entrainer (20).

13. Device (40) according to any one of claims 6 to 12, **characterised in that** the centring pin (1) is stationary in the device (40).

14. Device (40) according to any one of claims 7 to 13, **characterised in that** the entrainer (20) is provided as centring pin for the inner hole of the second substrate.

15. Device (40) according to any one of claims 7 to 14, **characterised in that** the centring pin (1) and the entrainer (20) have the same circumference.

16. Device (40) according to any one of the preceding claims, **characterised in that** at least one of the holding devices (48p; 86) has at least one vacuum suction means.

17. Device according to claim 16 **characterised in that** the vacuum suction means comprises a ring with a plurality of suction openings (52).

## Revendications

1. Dispositif (40) pour le collage de deux substrats présentant un trou intérieur en un disque de substrat, avec un premier dispositif de retenue tournant (48) pour la retenue du premier substrat, un deuxième dispositif de retenue tournant (86) pour la retenue du deuxième substrat et un dispositif d'entraînement (57) pour la rotation des premiers dispositifs de retenue (48), **caractérisé en ce que** le deuxième dispositif de retenue (86) est couplé d'une manière solidaire en rotation avec un arbre tournant (72), qui présente une partie de centrage (20), s'engageant dans le trou intérieur au moins du deuxième substrat, et **en ce que** le deuxième dispositif de retenue (86) est déplaçable axialement le long de l'axe de rotation (A) de l'arbre (72) sur celui-ci.

2. Dispositif selon la revendication 1, **caractérisé en ce que** l'axe de rotation du premier dispositif de retenue (48) coïncide avec l'axe de rotation (A) de l'arbre (72).

3. Dispositif selon la revendication 1 ou 2, **caractérisé en ce que** l'arbre (72) est reçu d'une manière librement tournante dans un support (68).

4. Dispositif selon la revendication 2, **caractérisé en ce que** l'arbre (72) est déplaçable le long de son axe de rotation avec le support (68).

5. Dispositif selon la revendication 4, **caractérisé en ce que** le deuxième dispositif de retenue (86) est déplaçable sur l'arbre (72) le long de son axe de rotation.

6. Dispositif selon l'une des revendications précédentes, **caractérisé par** un axe de centrage (1) relié d'une manière solidaire en rotation au premier dispositif de retenue (48) qui peut être inséré dans le trou intérieur au moins du premier substrat.

7. Dispositif selon la revendication 6, **caractérisé en ce que** la partie de centrage à l'arbre (72) est réalisée comme organe d'entraînement (20) avec lequel l'axe de centrage (1) peut être mis en prise.

8. Dispositif (40) selon la revendication 7, **caractérisé en ce que** l'axe de centrage (1) et l'organe d'entraînement (20) présentent des structures complémentaires pour une mise en prise par concordance des formes.

9. Dispositif (40) selon la revendication 8, **caractérisé en ce que** les structures comprennent des dents (13 ; 33) à l'axe de centrage (1) et à l'organe d'entraînement (20).

10. Dispositif (40) selon la revendication 9, **caractérisé en ce que** les dents (13 ; 33) présentent respectivement un flanc de dent (15 ; 35) s'étendant sensiblement parallèlement à la direction axiale de l'axe de centrage (1), respectivement de l'organe d'entraînement (20) ainsi qu'un flanc de dent (17 ; 37) incliné relativement à celui-ci.

11. Dispositif (40) selon la revendication 10, **caractérisé en ce que** le flanc de dent (15) à l'axe de centrage (1) s'étendant parallèlement à la direction axiale est orienté dans la direction de rotation.

12. Dispositif (40) selon l'une des revendications 9 à 11, **caractérisé en ce que** les dents (13, 33) lors de la mise en prise provoquent une orientation de rotation entre l'axe de centrage (1) et l'organe d'entraînement (20).

13. Dispositif (40) selon l'une des revendications 6 à 12, **caractérisé en ce que** l'axe de centrage (1) dans le dispositif (40) est fixe.

14. Dispositif (40) selon l'une des revendications 7 à 13, **caractérisé en ce que** l'organe d'entraînement (20) est prévu comme axe de centrage pour le trou intérieur du deuxième substrat.

15. Dispositif (40) selon l'une des revendications 7 à 14, **caractérisé en ce que** l'axe de centrage (1) et l'organe d'entraînement (20) ont le même pourtour.

16. Dispositif (40) selon l'une des revendications précédentes, **caractérisé en ce qu'**au moins l'un des dispositifs de retenue (48 ; 86) présente au moins un aspirateur de vide.

17. Dispositif selon la revendication 16, **caractérisé en ce que** l'aspirateur de vide présente un anneau avec un grand nombre d'ouvertures d'aspiration (53).
